# EUROPEAN PATENT SPECIFICATION

(11) **EP 0 435 391 B1**
(45) Date of publication and mention of the grant of the patent: **29.03.1995**
(21) Application number: 90203381.0
(22) Date of filing: 18.12.1990
(51) Int. Cl.: G09G 3/20, G09G 3/36

(54) **Color display apparatus**
Farbanzeigegerät
Dispositif d'affichage à couleurs

(30) Priority: 28.12.1989 JP 342096/89
(43) Date of publication of application: 03.07.1991
(73) Proprietor: Philips Electronics N.V., 5621 BA Eindhoven (NL)
(72) Inventor: Tanigaki, Yasushi, NL-5656 AA Eindhoven (NL); Satoh, Yoshikazu, NL-5656 AA Eindhoven (NL); Kobayashi, Yoshiharu, NL-5656 AA Eindhoven (NL)
(74) Representative: Raap, Adriaan Yde

(56) References cited:
- EP-A- 0 184 857
- EP-A- 0 236 111
- FR-A- 2 633 426
- GB-A- 2 162 674

## Description

This invention relates to color display apparatuses with display panels, for example, of the liquid crystal type, and more particularly to a color display apparatus which is capable of displaying patterns, such as characters, of a good quality with a limited number of pixels.

A color display panel constructed, for example, with the liquid crystal has color dots of the three primary colors (R, G and B) formed thereon in a predetermined order, wherein a color pixel is usually constituted by three adjacent ones of the color dots respectively corresponding to the three primary colors. In this case, the assignment of the combinations of color dots of the three primary colors on the display panel to the respective color pixels on the same panel is fixed in accordance with a rule determined in dependence on the kind of the panel. With this kind of color display panel, a pattern such as a character is displayed in a display unit which is a matrix of a predetermined number of pixels.

In recent years, color display panels of the active-panel type in which a TFT is used for each display dot have increased in number. In a color display panel of the above type, the upper limit of the resolution is of the order of 720 x 240 color dots (i.e., of the order of 240 x 240 pixels since a pixel is formed by three color dots). This is because it is difficult to form a greater number of TFTs on a broad surface of a panel without suffering from a decrease of the yield rate of panels. However, with a color display panel having a resolution of the above order it is still possible to display a PAL or an NTSC television picture in a sufficiently good quality and to display information such as characters of a good quality provided that the characters are large in size.

It has been a demand in recent years that a liquid crystal display panel of the above type can be used not only to display a television picture but also to display character information, for example, via a character broadcasting or a teletext. In the case of the European teletext, it is necessary to display about forty characters in the horizontal direction. Since the number of pixels in the horizontal direction is about 240 even in the recent liquid crystal color display panels as described earlier, the number of pixels per one character in the horizontal direction must be restricted to about five in order to display all the characters, that is to say, the number of color dots in the horizontal direction must be restricted to about fifteen.

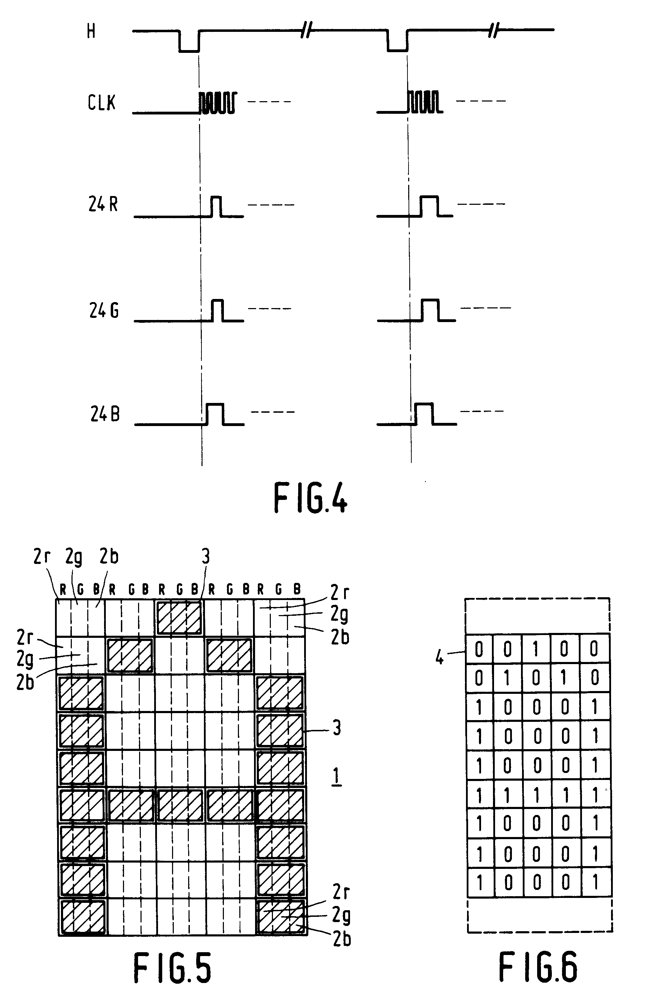

Fig. 5 is an illustration showing an enlarged portion of a display panel of the conventional liquid crystal color display apparatus, the portion corresponding to one character. In the shown display panel 1, a number of color dots (720 color dots in this example) of the three primary colors are arranged in the order of a red (R) color dot 2r, a green (G) color dot 2g and a blue (B) color dot 2b in a cyclic fashion in the horizontal direction, and a number of color dots (240 color dots in this example) of the same color are formed in the vertical direction, whereby a dot matrix in which the color dots of the three primary colors are distributed entirely and uniformly on the panel is formed. In each horizontal line, each color pixel 3 is formed by a respective one of the combinations of three adjacent color dots, namely, a red (R) color dot 2r, a green (G) color dot 2g and a blue (B) color dot 2b which are arranged in this order from left to right, whereby a color pixel matrix, for example, of 240 x 240 is formed on the panel as a whole. With this conventional display apparatus, one character (for example, a character A in Fig. 5) is displayed in a 5 x 9 color pixel matrix. In this case, the display apparatus has a memory 4 in which the respective character patterns are stored in the form of 5 x 9 bit patterns as shown in Fig. 6 (only the bit pattern for the character "A" is shown in Fig. 6). Those color dots 3 corresponding to bits "1" in the bit pattern (i.e., the color dots indicated by hatching in Fig. 5) are activated to display the character.

The above-described conventional liquid crystal color display apparatus is disadvantageous in that, since the number of pixels per each character is low, slant segments of a displayed character are significantly uneven (see the slant segments of the character "A" at its both shoulders portions in Fig. 5) it has thus been practically impossible to display a character of a good quality.

It is therefore an object of the present invention to provide a display apparatus which is capable of displaying patterns, such as characters, of a good quality with a limited number of color pixels.

According to the present invention, there is provided a color display apparatus comprising a color display panel on which a plurality of color dots of the three primary colors are formed in a predetermined order, a memory for storing bit information corresponding to dot-matrix patterns representative of characters, and a display control section for activating the color dots on the color display panel in accordance with the bit information read from the memory to thereby display characters characterized in that the memory is provided with at least three storage areas corresponding respectively to the color-dot groups of the three primary colors, in each storage area bit information corresponding to dot-matrix patterns representative respectively of all kinds of characters to be displayed being stored, the display control section activating the color dots of the three primary colors on the color display panel based respectively on three bit-information groups which are read respectively from said three storage areas and correspond to a character to be displayed, whereby the last-mentioned character is displayed on the color display panel.

With the above structure, in the case where the color dots of the three primary colors are arranged in each horizontal line in a certain order in a cyclic fashion, one color pixel can be formed not only by the combination of color dots of the three primary colors arranged in a specific order as in the conventional apparatus but also by those combinations of color dots of the three primary colors which are arranged in other orders (the combinations of color dots in the order of red, green and blue and the combination of color dots in the order of green, blue and red when the color dots are arranged in the order of red, green and blue in a cyclic fashion). Therefore horizontal positions of the respective color pixels which form a character to be displayed can be selected three times more finely than in the conventional apparatus. As a result, patterns such as characters of a better quality can be displayed with the same number of color dots.

An embodiment of the invention will now be described with reference to the accompanying drawings.
Fig. 1 is a diagrammatic illustration showing the structure of a memory in one embodiment of a color display apparatus according to the invention, wherein bit information representative of a character "A" stored in the memory is shown;
Fig. 2 is an enlarged plan view of a part of a liquid crystal color display panel in the embodiment of the invention wherein the character "A" is displayed;
Fig. 3 is a block diagram of the embodiment of the invention which is applied to a teletext apparatus;
Fig. 4 is a time chart of the various signals in the embodiment of Fig. 3;
Fig. 5 is an enlarged plan view of a part of a liquid crystal color display panel in the conventional color display apparatus wherein the character "A" is displayed; and
Fig. 6 is a diagrammatic illustration showing the structure of a memory in the conventional color display apparatus, wherein bit information representative of the character "A" stored in the memory is shown.

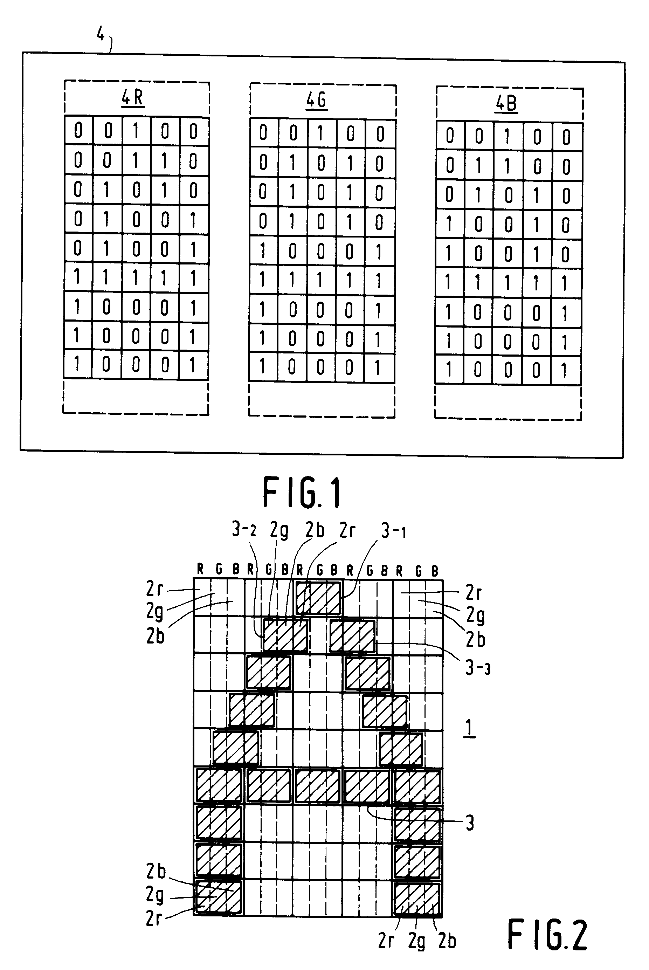

A color display apparatus according to the embodiment of the invention employs a liquid crystal color display panel 1 of the same structure as that shown in Fig. 5. A memory 4 of this display apparatus comprises, as shown in Fig. 1, a memory plane (or a storage area) 4R corresponding to the red (R) color dots 2r, 2r, 2r,... of the display panel 1, a memory plane 4G corresponding to the green (G) color dots 2g, 2g, 2g,... and a memory plane 4B corresponding to the blue (B) color dots 2b, 2b, 2b,... In this case, one bit-pattern of 5 x 9 is stored in each of the planes 4R, 4G and 4B for each character (in Fig. 1, only the three bit-patterns for the character "A" are shown). This enables the 5 x 9 dot-matrix for red, the 5 x 9 dot-matrix for green and the 5 x 9 dot-matrix for blue in the display area of 5 x 9 color pixels for one character to be driven independently of one another with respect to each character. The bit-patterns in the respective planes are determined, for example, in the following manner. In this embodiment, a color pixel 3 on the display panel 1 is formed not only by the combination of three color dots arranged in the order of red, green and blue from left to right but also by the combination of color dots arranged in the order of green, blue and red from left to right and the combination of color dots arranged in the order of blue, red and green from left to right. For example, the color pixel 3₋₁, located at the top of the character "A" in Fig. 2 is driven by the third bits "1" from the left in the top lines of the respective bit patterns in the three planes 4R, 4G and 4B in Fig. 1. The pixel 3₋₂ adjoining the pixel 3₋₁ at its lower left corner is driven by the third bit "1" from the left in the second line from the top of the bit pattern in the plane 4R, the second bit "1" from the left in the second line from the top of the bit pattern in the plane 4G and the second bit "1" from the left in the second line from the top of the bit pattern in the plane 4B. In a similar manner, the pixel 3₋₃ adjoining the pixel 3₋₁ at its lower right corner is driven by the fourth bit "1" from the left in the second line from the top of the bit pattern in the plane 4R, the fourth bit "1" from the left in the second line from the top of the bit pattern in the plane 4G and the third bit "1" from the left in the second line from the top of the bit pattern in the plane 4B. Thus, the color pixel 3₋₁ is formed by the color dots arranged in the order of red, green and blue, the color pixel 3₋₂ by the color dots arranged in the order of green, blue and red, and the color pixel 3₋₃ by the color dots arranged in the order of blue, red and green.

In this manner, the shift amount in the horizontal direction between two adjacent color pixels in the slant segments of the character "A" can be reduced to one color dot. In comparison to this, the shift in the horizontal direction between two adjacent color pixels in the slant segments has amounted to three color dots in the conventional apparatus shown in Fig. 5. Thus, with this embodiment each slant segment of a character can be displayed in the smoothed or even shape, whereby the quality of the displayed character is enhanced. In other words, according to this embodiment it is possible to obtain a display effect eventually the same as that which is obtained when a character is displayed in a dot-matrix of 13 x 9.

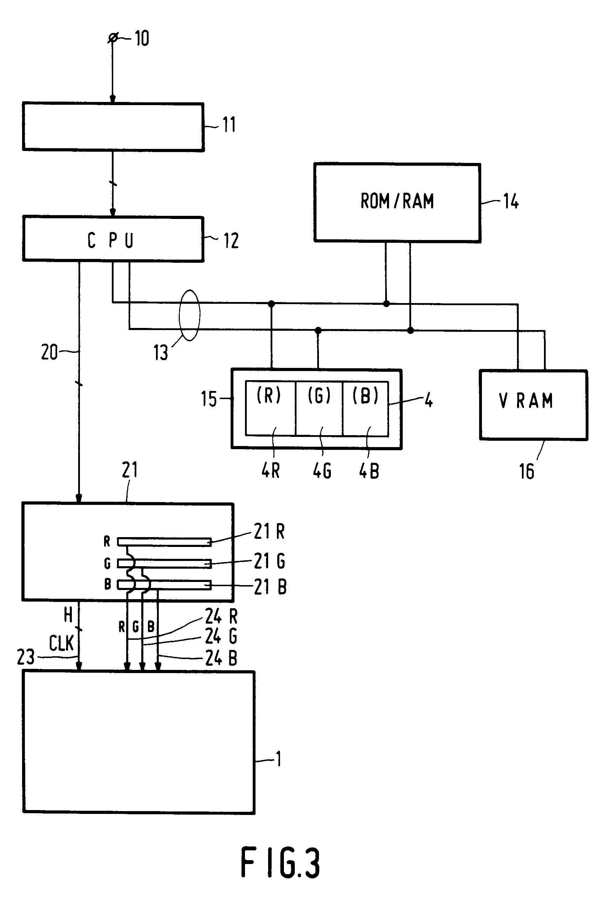

Fig. 3 is a block diagram of the above embodiment with the three planes 4R, 4G and 4B and the memory 4 when applied to a teletext apparatus.

In Fig. 3, the color display panel 1 is an active liquid-crystal color display panel with TFTs whose color dots are arranged as shown in Fig. 5 or 2. This display panel 1 has 720 x 720 color dots in total, for example.

This apparatus has an input terminal 10 for receiving a video signal which includes character information and is fed from a television radio-wave receiving section (not shown). The video signal is supplied to a character information separation circuit 11. The character information separated by the circuit 11 is supplied to a central processing unit (CPU) 12 which is constituted, for example, by a microprocessor. The CPU 12 is connected via a bus 13 to a ROM/RAM 14 for storing control programs for this apparatus, data and the like. The CPU 12 operates in accordance with the contents of the ROM/RAM 14. The CPU 12 discriminates characters to be displayed from the character information fed from the character information separation circuit 11 and supplies codes of the discriminated characters to a character generator 15 through the bus 13. The character generator 15 comprises the memory 4, of which structure is shown in Fig. 1, and reads and outputs three bit-patterns respectively from the three planes 4R, 4G and 4B in response to a supplied character code. These three bit-patterns are then stored in a video RAM (VRAM) 16.

When bit-patterns of characters for one entire screen has been stored in the VRAM 16, the CPU 12 reads respective bit data of the bit-patterns in a parallel fashion in accordance with the order of scanning of the display panel and supplies the read bit data via a bus 20 to a display controller 21. The display controller 21 comprises three color registers 21R, 21G and 21B, which correspond to the planes 4R, 4G and 4B, respectively, and the bit data corresponding to the planes 4R, 4G and 4B are loaded onto the color registers 21R, 21G and 21B, respectively. The display controller 21 is connected to the color display panel 1 via a control signal bus 23 for supplying control signals such as a horizontal synchronization signal H and a clock signal CLK and also via three color signal lines 24R, 24G and 24B for supplying respective shift outputs of the color registers 21R, 21G and 21B.

Fig. 4 is a time chart showing the relation between various output signals of the display controller 21. As shown, the display controller 21 sequentially outputs bit data from the respective color registers 21R, 21G and 21B onto a horizontal line, determined with reference to the horizontal synchronization signal H, with horizontal positions thereof being synchronized with the clock signal CLK. Thus, color dots on the display panel 1 are driven in accordance with these outputs, wherein a combination of three adjacent color dots of the three primary colors are driven as a pixel, so that the pixel is recognized as a pixel having a color almost equal to white.

According to this color display apparatus, it is thus possible to display characters on the display panel in a high quality as shown in Fig. 2.

In the conventional apparatus, there has been a possibility that a color pixel in a slant segment of a displayed character has no neighboring color pixel which is immediately adjacent to the first-mentioned color pixel in the vertical direction. Such a color pixel is liable to be recognized by human eye so that the three primary colors thereof are independent and not properly mixed together. According to this invention, however, it is possible to arrange every color pixel in a slant segment of a character so as to have a neighbouring color pixel which is directly adjacent to the first-mentioned color pixel. This will solve the above problem.

Although the above embodiment is described referring to the case where a color pixel is constituted by three color dots of the three primary colors arranged in the horizontal direction, the present invention should not be restricted only to this case, and it will be apparent that this invention can also be applicable to such cases where color dots are arranged in a delta fashion or in other fashions. Furthermore, although the color display panel in the above embodiment is of the liquid crystal type, a color display panel of other types such as the EC type can also be used in this invention. The invention can also be used in a conventional CRT, in which the information from the different memory parts is used to energize phosphor dots of neighbouring pixels.

## Claims

1. A color display apparatus comprising a color display panel on which a plurality of color dots (2) of the three primary colors are formed in a predetermined order, a memory (15) for storing bit information corresponding to dot-matrix patterns representative of characters, and a display control section for activating the color dots on the color display panel in accordance with the bit information read from the memory to thereby display characters characterized in that the memory (15) is provided with at least three storage areas corresponding respectively to the color-dot groups of the three primary colors (R, G, B), in each storage area bit information corresponding to dot-matrix patterns representative respectively of all displayable characters being stored, the display control section activating the color dots of the three primary colors on the color display panel based respectively on three bit-information groups which are read respectively from said three storage areas and correspond to a character to be displayed, whereby the last-mentioned character is displayed on the color display panel.

2. A color display apparatus according to Claim 1, characterized in that the display panel comprises a liquid crystal device.

## Patentansprüche

1. Farbanzeigegerät mit einem Farbanzeigefeld, auf dem eine Vielzahl von Farbpunkten (2) der drei Primärfarben in einer vorgegebenen Reihenfolge gebildet wird, mit einem Speicher (15) zum Einschreiben von Bitinformation entsprechend Punktmatrixmustern zur Darstellung von Buchstaben, und mit einem Anzeigesteuerabschnitt zum Aktivieren der Farbpunkte auf dem Farbanzeigefeld entsprechend der aus dem Speicher ausgelesenen Bitinformation zum Anzeigen der Buchstaben, dadurch gekennzeichnet, daß der Speicher (15) mit wenigstens drei Speichergebieten entsprechend den drei betreffenden Farbpunktgruppen der drei Primärfarben (R, G, B) vorgesehen ist, wobei in jedem Speichergebiet Bitinformation entsprechend Punktmatrixmustern zur Darstellung aller anzeigbarer Buchstaben gespeichert wird, und der Anzeigesteuerabschnitt die Farbpunkte der drei Primärfarben am Farbanzeigefeld auf der Basis der jeweiligen drei Bitinformationsgruppen aktiviert, die jeweils aus den drei Speichergebieten gelesen werden und einen anzuzeigenden Buchstaben entsprechen, wobei der letztgenannte Buchstabe am Farbanzeigefeld angezeigt wird.

2. Farbanzeigegerät nach Anspruch 1, dadurch gekennzeichnet, daß das Anzeigefeld eine Flüssigkristallanordnung enthält.

## Revendications

1. Appareil d'affichage en couleurs comprenant un panneau d'affichage en couleurs sur lequel une pluralité de points (2) des trois couleurs primaires est formée dans un ordre prédéterminé, une mémoire (15) pour stocker des informations binaires correspondant à des configurations de matrices de points représentatives de caractères et une section de commande d'affichage pour activer les points de couleur sur le panneau d'affichage en couleurs conformément aux informations binaires extraites de la mémoire pour ainsi afficher des caractères, caractérisé en ce que la mémoire (15) est pourvue d'au moins trois zones de stockage correspondant respectivement aux groupes de points des trois couleurs primaires (R, G, B), dans chaque zone de stockage, des informations binaires correspondant à des configurations de matrices de points représentatives respectivement de tous les caractères affichables étant stockées, la section de commande d'affichage activant les points de couleur des trois couleurs primaires sur le panneau d'affichage en couleurs sur la base, respectivement, de trois groupes d'informations binaires qui sont extraits respectivement desdites trois zones de stockage et correspondent à un caractère à afficher, le dernier caractère mentionné étant affiché sur le panneau d'affichage en couleurs.

2. Appareil d'affichage en couleurs selon la revendication 1, caractérisé en ce que le panneau d'affichage comprend un dispositif à cristaux liquides.
